# FASCICULE DE BREVET EUROPEEN

(11) **EP 2 715 193 B1**
(45) Date de publication et mention de la délivrance du brevet: **08.07.2015**
(21) Numéro de dépôt: 12725127.0
(22) Date de dépôt: 09.05.2012
(51) Int. Cl.: F16H 63/30, F16H 63/32, F16H 63/38, F15B 15/14

(54) **DISPOSITIF DE DEPLACEMENT COMMANDE EN TRANSLATION D'UNE FOURCHETTE DE PASSAGE DE VITESSE POUR BOITE DE VITESSES DE VEHICULE AUTOMOBILE**
VORRICHTUNG ZUR ÜBERSETZBAREN STEUERUNG DER BEWEGUNG EINER GANGSCHALTUNGSGABEL FÜR EIN KRAFTFAHRZEUGGETRIEBE
DEVICE FOR TRANSLATABLY CONTROLLING THE MOVEMENT OF A GEAR CHANGE FORK FOR A MOTOR VEHICLE GEARBOX

(30) Priorité: 25.05.2011 FR 1154557
(43) Date de publication de la demande: 09.04.2014
(73) Titulaire: Technoboost, 75116 Paris (FR)
(72) Inventeur: WASCHEUL, Michael, F-78260 Acheres (FR); GIANNONI, Marc, F-75009 Paris (FR)
(74) Mandataire: Ménès, Catherine
(86) Numéro de dépôt international: PCT/FR2012/051027
(87) Numéro de publication internationale: WO 2012/160287

(56) Documents cités:
- EP-A2- 0 150 583
- DE-A1-102008 004 497
- DE-A1-102008 063 601
- US-A- 4 003 297

## Description

La présente invention concerne un dispositif de déplacement commandé en translation d'une fourchette de passage de vitesse pour une boîte de vitesses de véhicule automobile.

La présente invention s'applique, en particulier mais non exclusivement, à un véhicule à transmission hydrostatique.

On connaît déjà de nombreux modèles de boîtes de vitesses de véhicules automobiles, dans lesquelles le passage des vitesses est assisté par l'intermédiaire de vérins qui actionnent les fourchettes de sélection et de passage des vitesses.

A titre d'exemple, le document FR 2 844 570 décrit un dispositif de sélection et de passage de vitesses pour une boîte de vitesses pilotée de véhicule automobile comprenant plusieurs fourchettes portées par un axe à déplacement commandé en translation relativement au carter de la boîte de vitesses et permettant l'engagement d'un rapport de vitesses choisi associé à l'une des fourchettes par l'intermédiaire d'un manchon de synchronisation lié en translation à la fourchette. Le dispositif comprend des organes de sélection associés respectivement aux fourchettes, constitués chacun par un petit vérin hydraulique à simple effet pouvant être sélectivement commandé pour déplacer radialement un doigt de verrouillage de la fourchette sélectionnée dans une gorge de l'axe de manière à solidariser la fourchette sélectionnée à cet axe et déplacer en translation la fourchette pour le passage d'un rapport de vitesse choisi associé à cette fourchette. Les fourchettes sont montées sur un axe commun dont le déplacement en translation peut être commandé par un vérin hydraulique à double effet.

Le document DE 10 2008 004 497 A1 divulgue un dispositif comprenant les caractéristiques du préambule de la revendication 1.

Le but de la présente invention est de fournir un dispositif de déplacement commandé en translation d'une fourchette de passage de vitesses, qui offre la possibilité de prendre en compte un nombre maximal de contraintes dès le début de la conception de la boîte de vitesses intégrant la fourchette, et de simplifier ou supprimer différents problèmes de mise au point de géométrie ou d'étanchéité.

Un autre but de la présente invention est de fournir un tel dispositif, qui simplifie la réalisation du carter de boîte de vitesses tout en renforçant sa tenue et son étanchéité.

Enfin, c'est également un but de la présente invention de fournir un tel dispositif, qui soit, de manière générale, simple, stable, fiable et économique, notamment dans sa fabrication.

Pour parvenir à ces buts, la présente invention a pour objet un dispositif de déplacement commandé en translation d'une fourchette de passage de vitesse, destiné notamment à une boîte de vitesses de véhicule automobile, qui comporte une fourchette de passage de vitesse, un vérin hydraulique comprenant un axe cylindrique fixe avec une paroi transversale fixe en saillie de la surface externe dudit axe, un piston mobile en translation par coulissement sur ladite paroi transversale fixe, ledit piston étant formé d'un corps de piston fermé par une pièce de fermeture radiale dite « bouchon » de façon à définir deux chambres internes du vérin situées respectivement de part et d'autre de ladite paroi transversale fixe, et des moyens de mise en pression de fluide de l'une et l'autre des deux chambres du vérin pour déplacer dans un sens ou dans l'autre le piston. Dans ce dispositif selon l'invention, le corps de piston est directement intégré à la fourchette de passage de vitesse de sorte que, sous l'effet de la pression dans une chambre du vérin, c'est la fourchette qui se déplace en translation.

Les moyens de mise en pression de fluide de l'une et l'autre des deux chambres du vérin pour déplacer dans un sens ou dans l'autre le piston sont constitués par deux arrivées de fluide sous pression, qui sont liées à une source de fluide sous pression et qui sont situées à l'une et à l'autre des deux extrémités de l'axe cylindrique fixe, chaque extrémité communiquant avec une chambre du vérin respectivement par l'intermédiaire d'un conduit interne de l'axe cylindrique fixe.

Selon l'invention, le bouchon est fixé axialement sur le corps de piston par vissage, un alésage axial fileté du bouchon venant coopérer par vissage avec un filetage axial de la surface externe du corps de piston.

Il est prévu une empreinte de serrage sur la face latérale du bouchon opposée au corps de piston, de façon à permettre le vissage du bouchon sur le corps de piston.

Il est également prévu une rainure axiale sur la surface externe du corps de piston, une vis étant engagée dans cette rainure pour le guidage en translation de la fourchette intégrée au corps de piston.

La surface cylindrique externe du bouchon présente des rainures périphériques de section sensiblement en arc de cercle, qui forment des pistes de « billage » de mise en position des vitesses engagées ou point mort.

Selon une variante de réalisation de l'invention, le piston est monté coulissant sur l'axe cylindrique fixe à l'encontre de moyens de rappel élastique, qui ramènent le piston au point mort, de telle sorte que le vérin hydraulique du dispositif ne fonctionne plus en mode dit « mode double effet » mais en mode dit « mode simple effet à rappel élastique ».

Ces moyens de rappel élastiques sont avantageusement constitués par deux ressorts de rappel, de type ressorts hélicoïdaux coaxiaux avec l'axe cylindrique fixe, qui s'appliquent sur l'une et l'autre des deux faces latérales du piston.

L'invention a également pour objet une boîte de vitesses pilotée de véhicule automobile, qui comprend plusieurs fourchettes de sélection et de passage de vitesse et des dispositifs associés respectivement aux fourchettes qui commandent le déplacement en translation de la fourchette associée, ces dispositifs étant conformes à celui décrit ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en coupe longitudinale du dispositif selon l'invention permettant de commander le déplacement d'une fourchette de sélection et de passage de vitesse,
- la figure 2 est une vue en perspective, éclatée, du dispositif de commande en translation de fourchette de la figure 1, et
- la figure 3 est une vue en coupe longitudinale d'une variante de réalisation du dispositif de commande en translation de fourchette des figures 1 et 2.

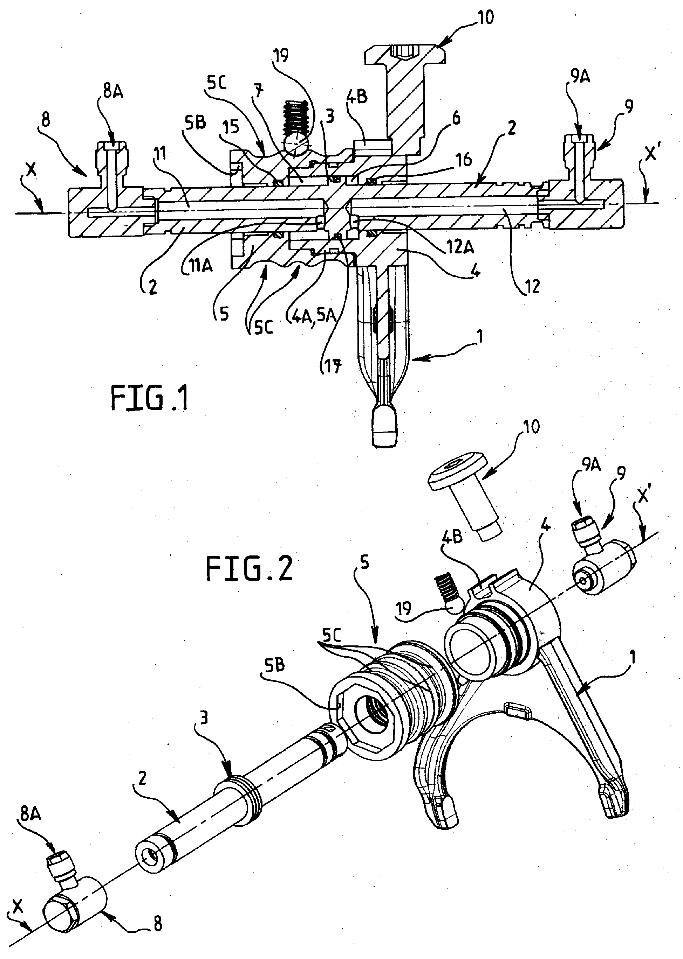

En référence aux figures 1 et 2, on a représenté le dispositif selon l'invention permettant de commander le déplacement en translation d'une fourchette référencée 1 de sélection et de passage de vitesse, utilisée dans une boîte de vitesses pilotée ou robotisée de véhicule automobile, par exemple.

Ce dispositif est composé d'un mécanisme de type vérin hydraulique auquel est intégrée la fourchette 1 de la manière exposée ci-après. Le vérin hydraulique comprend un axe cylindrique fixe 2, d'axe XX', avec une partie transversale également cylindrique en saillie de la surface externe de l'axe 2 dénommée « paroi transversale » dans la suite du texte et référencée 3, et un piston mobile en translation par coulissement sur la surface externe cylindrique de la paroi transversale 3. Le piston est formé en deux pièces fixées l'une à l'autre, à savoir une première pièce, dite « corps de piston » référencé 4, fermée latéralement par une pièce de fermeture radiale, dite « bouchon » et référencée 5, de façon à définir deux chambres internes 6 et 7 du vérin situées respectivement de part et d'autre de la paroi transversale 3. Des moyens de mise en pression de fluide de l'une et l'autre de ces deux chambres 6 et 7 sont prévus pour déplacer dans un sens ou dans l'autre le piston 4, 5. Selon le principe même de l'invention, le corps de piston 4 est directement intégré à la fourchette 1 de passage de vitesse de sorte que, sous l'effet de la pression dans une chambre du vérin, c'est la fourchette 1 qui se déplace en translation.

Il est à noter que le vérin ainsi intégré à la fourchette est au plus près du synchroniseur.

Les moyens de mise en pression des deux chambres 6 et 7 du vérin sont constitués par deux arrivées 8A et 9A de fluide sous pression, qui sont liées à une source de fluide sous pression et qui sont situées à l'une et à l'autre extrémité de l'axe cylindrique fixe 2, chaque extrémité communiquant avec une chambre 6, 7 du vérin respectivement par l'intermédiaire d'un conduit interne 12, 12A respectivement 11, 11A de l'axe cylindrique fixe 2. Ces deux conduits internes présentent une partie axiale 11, respectivement 12, et une partie radiale adjacente 11A, respectivement 12A débouchant dans la chambre correspondante.

Les arrivées 8A et 9A de fluide sous pression sont avantageusement prévues dans des manchons d'extrémités 8, respectivement 9, fixés, par vissage par exemple, aux extrémités de l'axe cylindrique fixe 2.

Le bouchon 5 et le corps de piston 4 intégré à la fourchette 1 sont montés en vis-à-vis sur l'axe cylindrique 2, puis on visse axialement le bouchon sur le corps de piston 4. A cette fin, le bouchon 5 présente un alésage axial 5A fileté destiné à venir coopérer par vissage avec un filetage axial 4A de la surface externe du corps de piston 4.

Une empreinte de serrage 5B sur la face latérale du bouchon 5 opposée au corps de piston 4, de façon à permettre le vissage du bouchon 5 sur le corps de piston 4.

Il est prévu une rainure axiale 4B sur la surface externe du corps de piston 4 destinée à recevoir une vis 10 pour le guidage en translation de la fourchette 1 intégrée au corps de piston 4.

Des rainures périphériques 5C sont prévues sur la surface cylindrique externe du bouchon 5. Ces rainures 5C, de section sensiblement en arc de cercle, forment des pistes de « billage » de mise en position des vitesses engagées ou point mort (illustrée par la position de la bille 19 sur la figure 1).

Un joint d'étanchéité 15 est prévu pour la liaison entre le bouchon 5 et l'axe cylindrique 2. Un autre joint d'étanchéité 16 est prévu pour la liaison entre le corps de piston 4 et l'axe cylindrique 2. Enfin, un joint d'étanchéité 17 est aussi prévu pour la liaison entre le corps de piston 4 et la paroi transversale 3.

Le dispositif de déplacement en translation d'une fourchette de passage de vitesse décrit ci-dessus fonctionne de la manière suivante.

Le fluide sous pression (huile) arrive par l'intérieur de l'axe cylindrique 2, à savoir par le conduit 11, 11A ou 12, 12A. Sous l'effet de la pression, le piston 4, 5 se déplace et la fourchette 1, intégrée au piston 4, 5 se déplace pour engager une vitesse. Le retour au point mort s'effectue par l'arrivée d'une pression de l'autre côté de la paroi transversale 3 qui sépare les deux chambres 6 et 7 du vérin, c'est-à-dire par le conduit 12 ou 11 respectivement, ce qui ramène le piston en position neutre, le billage formé par les pistes 5C étant prévu pour marquer les positions des vitesses engagées.

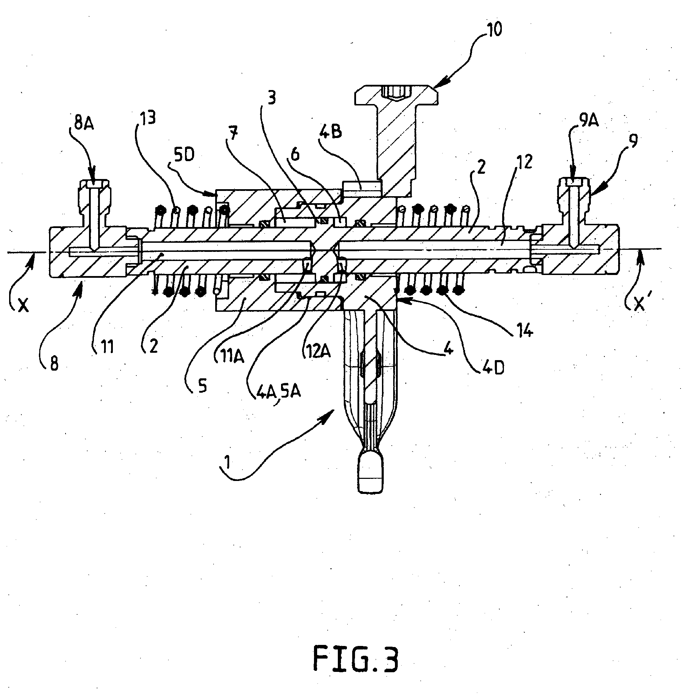

En référence à la figure 3, on a représenté une variante de réalisation de la présente invention. Dans cette variante de la figure 3, les pièces et parties de pièces, qui sont identiques aux pièces et parties de pièces des figures 1 et 2, ne sont pas décrites en détail et portent les mêmes références numériques que ces dernières.

Les différences entre le mode de réalisation des figures 1 et 2 et le mode de réalisation en variante de la figure 3 apparaissent dans la description du fonctionnement de cette variante, qui est le suivant.

Le fluide sous pression (huile) arrive par l'intérieur de l'axe cylindrique 2, à savoir par le conduit 11, 11A ou 12, 12A. Sous l'effet de la pression, le piston 4, 5 se déplace et la fourchette 1, intégrée au piston 4, 5 se déplace pour engager une vitesse. Dans le même temps, le ressort situé du côté du conduit considéré se retrouve comprimé, c'ést-à-dire le ressort 14 en appui sur la surface latérale 4D du piston si le fluide arrive par le conduit 12, 12A ou le ressort 13 en appui sur la surface latérale 5D si le fluide arrive par le conduit 11, 11A. Pour ne pas continuer à alimenter en pression le vérin, par conséquent pour ne pas créer de pertes supplémentaires par frottement de la fourchette sur le manchon et ne pas faire fonctionner la pompe d'alimentation pendant tout le temps de la vitesse engagée, on relâche légèrement la pression afin de se retrouver dans le jeu de fonctionnement du manchon et de la fourchette. Le ressort concerné se détend et repousse le piston 4, 5. Ensuite, On bloque hydrauliquement le vérin dans la position vitesse engagée. Pour le retour au point mort, c'est le ressort concerné qui repousse le piston et la fourchette intégrée.

On notera que dans cette variante de réalisation la surface externe ne porte pas de rainures périphériques destinées à recevoir l'empreinte de « billage ».

Le dispositif de déplacement commandé en translation d'une fourchette de passage de vitesse, tel que décrit ci-dessus dans deux exemples de réalisation différents, présente de nombreux avantages, parmi lesquels les avantages suivants :
- il permet d'intégrer la fonction de sélection et de passage des vitesses d'une façon plus simple et plus « compacte »,
- il utilise la même huile que pour le pilotage du véhicule, par conséquent, il n'y a pas de diversité d'huile,
- l'huile est de meilleure viscosité que les huiles de boîtes de vitesses, moins sensible à la température,
- il permet une mise au point du vérin de façon indépendante des carters de boîte de vitesses et d'embrayage,
- il ne nécessite par de pompe spécifique pour l'asservissement de pression de pilotage et de commande des vérins de passage des vitesses,
- il permet de supprimer les problèmes de mise au point sur les chaînes de cotes entre l'actionneur de boîte et les fourchettes de passage de vitesses,
- il permet une bonne mise au point mort des vitesses lors de l'accostage des crosses de la boîte de vitesses avec l'actionneur de ladite boîte,
- il permet une bonne étanchéité entre l'actionneur et le carter de boîte de vitesses,
- il permet d'obtenir une bonne tenue mécanique du carter, parce qu'il n'y a plus de trou pour la liaison entre les crosses et l'actionneur de la boîte de vitesses,
- il permet de simplifier la réalisation du carter de boîte de vitesses, parce qu'il n'y a pas de canaux ni d'inserts pour les chambres d'huile, et
- il supprime les problèmes de porosité du carter de boîte de vitesses et de fuite sous pression d'huile.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Dispositif de déplacement commandé en translation d'une fourchette de passage de vitesse, destiné notamment à une boîte de vitesses de véhicule automobile, qui comporte une fourchette (1) de passage de vitesse, un vérin hydraulique comprenant un axe cylindrique fixe (2) avec une paroi transversale fixe (3) en saillie de la surface externe dudit axe (2), un piston (4, 5) mobile en translation par coulissement sur ladite paroi transversale fixe (3), ledit piston (4, 5) étant formé d'un corps de piston (4) fermé par une pièce de fermeture dite « bouchon » (5) de façon à définir deux chambres internes (6, 7) du vérin situées respectivement dé part et d'autre de ladite paroi transversale fixe (3), et des moyens de mise en pression de fluide de l'une et l'autre des deux chambres (6, 7) du vérin pour déplacer dans un sens ou dans l'autre le piston (4, 5), le corps de piston (4) étant directement intégré à la fourchette (1) de passage de vitesse de sorte que sous l'effet de la pression dans une chambre du vérin, c'est la fourchette (1) qui se déplace en translation, ledit dispositif étant **caractérisé en ce que** le bouchon (5) est fixé axialement sur le corps de piston (4) par vissage, un alésage axial (5A) fileté du bouchon (5) venant coopérer par vissage avec un filetage axial (4A) de la surface externe du corps de piston (4) et **en ce qu'**il est prévu une empreinte de serrage (5B) sur la face latérale du bouchon (5) opposée au corps de piston (4) de façon à permettre le vissage du bouchon (5) sur le corps de piston (4).

2. Dispositif selon la revendication 1, **caractérisé en ce que** les moyens de mise en pression de fluide de l'une et l'autre des deux chambres (6, 7) du vérin pour déplacer dans un sens ou dans l'autre le piston (4, 5) sont constitués par deux arrivées (8A, 9A) de fluide sous pression, qui sont liées à une source de fluide sous pression et qui sont situées à l'une et à l'autre extrémité de l'axe cylindrique fixe (2), chaque extrémité communiquant avec une chambre (6, 7) du vérin respectivement par l'intermédiaire d'un conduit interne (11, 11A ; 12, 12A) de l'axe cylindrique fixe (2).

3. Dispositif selon la revendication 1, **caractérisé en ce qu'**il est prévu une rainure axiale (4B) sur la surface externe du corps de piston (4) et **en ce qu'**une vis (10) est engagée dans la rainure (4B) pour le guidage en translation de la fourchette (1) intégrée au corps de piston (4).

4. Dispositif selon l'une quelconque des revendications 1 à 3, **caractérisé en ce que** la surface cylindrique externe du bouchon (5) présente des rainures périphériques (5C) de section en arc de cercle, qui forment des pistes de « billage » de mise en position des vitesses engagées ou point mort.

5. Dispositif selon l'une quelconque des revendications 1 à 3, **caractérisé en ce que** le piston (4, 5) est monté coulissant sur l'axe cylindrique fixe (2) à l'encontre de moyens de rappel élastique, qui ramènent le piston (4, 5) au point mort, de telle sorte que le vérin hydraulique du dispositif fonctionne en mode dit « mode simple effet à rappel élastique ».

6. Dispositif selon la revendication 5, **caractérisé en ce que** lesdits moyens de rappel élastiques sont constitués par deux ressorts de rappel (13, 14), de type ressorts hélicoïdaux coaxiaux avec l'axe cylindrique fixe (2), qui s'appliquent sur l'une et l'autre des deux faces latérales du piston (4, 5).

7. Boîte de vitesses pilotée de véhicule automobile comprenant plusieurs fourchettes de sélection et de passage de vitesse, **caractérisée en ce qu'**elle comprend des dispositifs associés respectivement aux fourchettes qui commandent le déplacement en translation de la fourchette associée, lesdits dispositifs étant conformes à l'une quelconque des revendications précédentes.

8. Véhicule automobile, de type à chaîne de traction hydrostatique, **caractérisé en ce qu'**il comporte une boîte de vitesses pilotée conforme à la revendication précédente.

## Patentansprüche

1. Vorrichtung zur übersetzbaren Steuerung der Bewegung einer Gangschaltungsgabel, die insbesondere für ein Kraftfahrzeuggetriebe bestimmt ist, umfassend eine Gangschaltungsgabel (1), einen Hydraulikzylinder, umfassend eine feste Zylinderachse (2) mit einer festen Querwand (3), die über die Außenfläche der Achse (2) hinausragt, einen Kolben (4, 5), der in Translation durch Gleiten auf der festen Querwand (3) beweglich ist, wobei der Kolben (4, 5) von einem Kolbenkörper (4) gebildet ist, der durch ein Verschlussstück, "Stöpsel" (5) genannt, verschlossen ist, um zwei Innenkammern (6, 7) des Zylinders zu definieren, die jeweils beiderseits der festen Querwand (3) angeordnet sind, und Mittel zum Setzen der einen und der anderen der beiden Kammern (6, 7) des Zylinders unter Fluiddruck, um den Kolben (4, 5) in die eine oder die andere Richtung zu bewegen, wobei der Kolbenkörper (4) direkt in die Gangschaltungsgabel (1) integriert ist, so dass es unter der Wirkung des Drucks in einer Kammer des Zylinders die Gabel (1) ist, die sich in Translation bewegt, wobei die Vorrichtung **dadurch gekennzeichnet ist, dass** der Stöpsel (5) axial auf dem Kolbenkörper (4) durch Schrauben befestigt ist, wobei eine axiale Gewindebohrung (5A) des Stöpsels (5) durch Schrauben mit einem Axialgewinde (4A) der Außenfläche des Kolbenkörpers (4) zusammenwirkt, und dass ein Befestigungsabdruck (5B) auf der Seitenfläche des Stöpsels (5), die dem Kolbenkörper (4) gegenüberliegt, vorgesehen ist, um das Schrauben des Stöpsels (5) auf den Kolbenkörper (4) zu ermöglichen.

2. Vorrichtung nach Anspruch 1, **dadurch gekennzeichnet, dass** die Mittel zum Setzen der einen und der anderen der beiden Kammern (6, 7) des Zylinders unter Fluiddruck, um den Kolben (4, 5) in die eine oder die andere Richtung zu bewegen, von zwei Druckfluidzuleitungen (8A, 9A) gebildet sind, die mit einer Druckfluidquelle verbunden sind und sich an dem einen und dem anderen Ende der festen Zylinderachse (2) befinden, wobei jedes Ende mit einer Kammer (6, 7) des Zylinders jeweils mit Hilfe einer inneren Schaltung (11, 11A; 12, 12A) der festen Zylinderachse (2) in Verbindung steht.

3. Vorrichtung nach Anspruch 1, **dadurch gekennzeichnet, dass** eine Axialnut (4B) auf der Außenfläche des Kolbenkörpers (4) vorgesehen ist, und dass eine Schraube (10) in der Nut (4B) für die Führung der in den Kolbenkörper (4) integrierten Gabel (1) in Eingriff ist.

4. Vorrichtung nach einem der Ansprüche 1 bis 3, **dadurch gekennzeichnet, dass** die zylindrische Außenfläche des Stöpsels (5) Umfangsnuten (5C) mit einem kreisbogenförmigen Querschnitt aufweist, die "Kugelpisten" für die Positionierung der eingelegten Gänge oder für den Leerlauf bilden.

5. Vorrichtung nach einem der Ansprüche 1 bis 3, **dadurch gekennzeichnet, dass** der Kolben (4, 5) gleitend auf der festen Zylinderachse (2) gegen elastische Rückstellmittel montiert ist, die den Kolben (4, 5) zum Leerlauf zurückführen, so dass der Hydraulikzylinder der Vorrichtung im so genannten "Modus mit Einfachwirkung mit elastischer Rückstellung" funktioniert.

6. Vorrichtung nach Anspruch 5, **dadurch gekennzeichnet, dass** die elastischen Rückstellmittel von zwei Rückstellfedern (13, 14) vom Typ Spiralfedern, die zur festen Zylinderachse (2) koaxial sind, gebildet sind, die sich an die eine und die andere der beiden Seitenflächen des Kolbens (4, 5) anlegen.

7. Gesteuertes Kraftfahrzeuggetriebe, umfassend mehrere Gabeln zur Auswahl der Gänge und zum Schalten, **dadurch gekennzeichnet, dass** es Vorrichtungen umfasst, die jeweils den Gabeln zugeordnet sind, die die Translationsbewegung der zugehörigen Gabel steuern, wobei die Vorrichtungen einem der vorhergehenden Ansprüche entsprechen.

8. Kraftfahrzeug vom Typ mit hydrostatischer Antriebskette, **dadurch gekennzeichnet, dass** es ein gesteuertes Getriebe nach dem vorhergehenden Anspruch umfasst.

## Claims

1. A device for translatably controlling the movement of a gear change fork, intended in particular for a gearbox of a motor vehicle, which comprises a gear change fork (1), a hydraulic cylinder including a stationary cylindrical spindle (2) with a stationary transverse wall (3) projecting from the external surface of said spindle (2), a piston (4, 5) that is translatably movable by sliding over said transverse stationary wall (3), said piston (4, 5) being formed by a piston body (4) closed by a closing part referred to as a "plug" (5) so as to define two inner chambers (6, 7) of the cylinder which are situated respectively on either side of said stationary transverse wall (3), and means for fluid pressurization of both of the two chambers (6, 7) of the cylinder for moving the piston (4, 5) in one direction or another, the piston body (4) being directly built into the gear change fork (1) whereby, as a result of the pressure in a cylinder chamber, it is the fork (1) that moves translatably, said device being **characterized in that** the plug (5) is fixed axially on the piston body (4) by screwing, a threaded axial bore (5A) of the plug (5) coming to cooperate by screwing with an axial thread (4A) of the external surface of the piston body (4) and **in that** a tightening recess (5B) is provided on the opposite lateral face of the plug (5) with respect to the piston body (4) so as to permit the screwing of the plug (5) on the piston body (4).

2. The device according to claim 1, **characterized in that** the fluid pressurization means of both of the two chambers (6, 7) of the cylinder for moving the piston (4, 5) in one direction or another are constituted by two inlets (8A, 9A) of pressurized fluid, which are connected to a source of pressurized fluid and which are situated at one and the other end of the stationary cylindrical spindle (2), each end communicating with a chamber (6, 7) of the cylinder respectively by means of an internal duct (11, 11A; 12, 12A) of the stationary cylindrical spindle (2).

3. The device according to claim 1, **characterized in that** an axial groove (4B) is provided on the external surface of the piston body (4) and **in that** a screw (10) is engaged in the groove (4B) for translatably guiding the fork (1) built into the piston body (4).

4. The device according to any one of claims 1 to 3, **characterized in that** the external cylindrical surface of the plug (5) has peripheral grooves (5C) with a cross-section in the shape of an arc of a circle, which form "ball indentation" tracks for positioning of the engaged gears or a neutral position.

5. The device according to any one of claims 1 to 3, **characterized in that** the piston (4, 5) is mounted so as to slide on the stationary cylindrical spindle (2) in opposition to elastic return means, which return the piston (4, 5) to the neutral position, such that the hydraulic cylinder of the device functions in a so-called "single acting mode with elastic return".

6. The device according to claim 5, **characterized in that** said elastic return means are constituted by two return springs (13, 14) of the helicoidal spring type coaxial with the stationary cylindrical spindle (2), which are applied on both of the two lateral faces of the piston (4, 5).

7. An electronically controlled gearbox for a motor vehicle including a plurality of gear selection and change forks, **characterized in that** it includes devices associated respectively with the forks which translatably control the movement of the associated fork, said devices being in accordance with any one of the preceding claims.

8. A motor vehicle, of the hydrostatic power train type, **characterized in that** it comprises an electronically controlled gearbox according to the preceding claim.
